# EUROPÄISCHE PATENTANMELDUNG

(11) **EP 1 585 038 A1**
(43) Veröffentlichungstag der Anmeldung: **12.10.2005**
(21) Anmeldenummer: 05450062.4
(22) Anmeldetag: 07.04.2005
(51) Int. Cl.: G06F 17/30

(54) **Verfahren und System zur Bereitstellung von Informationen bestehend aus öffentlicher und nicht-öffentlicher Zusatzinformation**

(30) Priorität: 07.04.2004 AT 2612004 U
(71) Anmelder: MTIT Elektronische Datenverarbeitung GmbH, 1230 Wien (AT)
(72) Erfinder: Neubauer, Martin, Dipl.-Ing., 1230 Wien (AT)
(74) Vertreter: Margotti, Herwig Franz

(57) **Zusammenfassung**

Verfahren zur Bereitstellen von Informationen, bestehend aus einer öffentlichem Basisinformation und einer auf Anforderung zu übertragenen Zusatzinformation, gekennzeichnet durch
Empfangen der von einem Kundenendgerät gesendeten Information auf dem Server, Speichern der Information in einem mit dem Server kommunizierenden Datenspeicher, Generieren eines Codes, Registrierung des Codes mit der empfangenen Information,
und Übertragung des Codes an den Kunden, optional zusammen mit der öffentlichen Basisinformation,
Empfangen eines von einem Nachfrager gesendeten Codes auf dem Server. Überprüfung des Codes nach der zugewiesenen Information, und ggf. Übertragung der Zusatzinformation an den Nachfrager.

## Beschreibung

Die Erfindung betrifft ein Verfahren und ein System zum Bereitstellen von Information, wobei die Information einen öffentlichen Basisinformationsbestandteil und einen nur auf Anforderung elektronisch bereitzustellenden Zusatzinformationsbestandteil aufweist.

Ein solches Verfahren und System können dazu genutzt werden, Interessenten Information "on demand" auf elektronischem Weg zur Verfügung zu stellen, wodurch auch Werbe- und Verkaufssysteme realisiert werden können.

Das erfindungsgemäße Verfahren zum Bereitstellen von Information umfasst die in Anspruch 1 angeführten Merkmale. Vorteilhafte Ausgestaltungen sind in den Unteransprüchen dargelegt.

Das erfindungsgemäße System zum Bereitstellen von Information ist in Anspruch 12 dargelegt.

Durch das erfindungsgemäße Verfahren und System ist es beispielsweise möglich, Bilder, Video, Text, die ein Produkt, ein Objekt, einen Gegenstand oder eine Dienstleistung näher beschreiben oder die selbst ein verkaufbares Produkt darstellen, in elektronischer Form auf Anforderung zur Verfügung zu stellen, wobei diese Daten einen Zusatzinformationsbestandteil zu einem öffentlichen Basisinformationsbestandteil darstellen, der in frei zugänglicher Form in elektronischen oder Printmedien etc. veröffentlicht (inseriert) wird.

Das erfindungsgemäße Informationsbereitstellungsverfahren kann vorteilhaft unter Verwendung bestehender Telekommunikations- oder Computernetzwerke ausgeführt werden, so dass sowohl ein Auftraggeber die Information über standardisierte Kommunikationsendgeräte, wie Mobiltelefone, Personal Digital Assistants (PDA), digitale Kameras mit Kommunikationsmitteln, oder Personal Computer, an den Server senden kann, als auch ein Interessent, der den Zusatzinformationsbestandteil anfordern möchte, dies unter Verwendung von Mobiltelefon, Personal Computer und dergleichen tun kann. Somit lässt sich das erfindungsgemäße Verfahren und System mit geringem zusätzlichen Hardwareaufwand zu bestehenden Kommunikationsnetzen flächendeckend implementieren und somit eine hohe Akzeptanz bei den Konsumenten erreichen.

In einer Ausgestaltung der Erfindung wird der Zusatzinformationsbestandteil nicht unmittelbar an die anfordernde Informationsanforderungseinrichtung übertragen, sondern zur besseren Verteilung der Belastung von vorhandenen Kommunikationskanälen bzw. zur besseren Ausnützung der Bandbreiten verschiedener Kommunikationskanäle ein Freischaltecode an die Informationsanforderungseinrichtung übertragen, der es der Informationsanforderungseinrichtung ermöglicht, den Zusatzinformationsbestandteil von einer vorgegebenen oder zusammen mit dem Freischaltecode mitgeteilten elektronischen Adresse herunterzuladen.

Vorteilhaft wird ein Identitätsmerkmal der mit dem Server kommunizierenden Auftraggeber-Kommunikationseinrichtungen und/oder Informationsanforderungseinrichtungen protokolliert, sodass diverse mit dem erfindungsgemäßen Informationsbereitstellungssystem realisierbare Dienstleistungen auch entgeltlich angeboten werden können.

In einer besonders vorteilhaften, weil auf wohldefinierten Standards aufsetzenden Ausführungsform der Erfindung wird die Information von der Auftraggeber-Kommunikationseinrichtung an den Server mittels SMS/MMS oder E-Mail übertragen. In ähnlicher Weise kann auch der Zusatzinformationsbestandteil von dem Server an die Informationsanforderungseinrichtung mittels SMS/MMS oder E-Mail übertragen werden.

Der öffentliche Basisinformationsbestandteil umfasst vorteilhaft Text, Bilder oder Videosequenzen, wobei erstere in elektronischen oder Printmedien veröffentlicht werden und letztere vorteilhaft über das Internet verfügbar gemacht werden, beispielsweise auf Auktions- oder Inserat-Internetseiten.

Der Zusatzinformationsbestandteil kann einerseits eine Kontaktadresse, insbesondere Telefonnummer oder E-Mail-Adresse, des Auftraggebers enthalten, so dass sich ein Interessent direkt mit dem Auftraggeber in Verbindung setzen kann, aber vor allem auch ergänzende Informationen, wie Texte, Bilder, Videosequenzen. Der Zusatzinformationsbestandteil kann weiters auch elektronische Dateien, wie z.B. Computerprogramme, enthalten, die direkt auf der Informationsanforderungseinrichtung oder auf anderen Geräten ausführbar oder anzeigbar sind.

Der Auftraggeber kann einerseits den öffentlichen Basisinformationsbestandteil der Information auf herkömmliche Weise, d.h. durch Weitergeben dieser Daten und des Auftragscodes an die Inseratenabteilung von lokalen Tageszeitungen etc., zur Veröffentlichung bringen. In einer Fortbildung der Erfindung ist aber vorgesehen, diese Aufgabe automatisch durch den Server lösen zu lassen und somit für den Auftraggeber eine deutliche Vereinfachung und Beschleunigung des Vorganges zu bewirken. Dabei wird der öffentliche Basisinformationsbestandteil und der Auftragscode vom Server elektronisch an Zeitungen oder Internetseiten übermittelt, vorzugsweise unter entsprechender Aufbereitung der Daten für den Druck oder für die Anzeige im Internet.

Aus Sicherheitsgründen und zur Bewältigung hoher Verarbeitungslasten kann der Server vorteilhaft als verteiltes Computersystem ausgeführt sein, wobei auch der Datenspeicher zur Speicherung der Informationen extern ausgebildet sein kann.

Die Erfindung wird nachfolgend anhand von Ausführungsbeispielen unter Bezugnahme auf die Zeichnungen beispielhaft näher erläutert. Die Erfindung ist jedoch nicht auf diese Ausführungsbeispiele beschränkt.

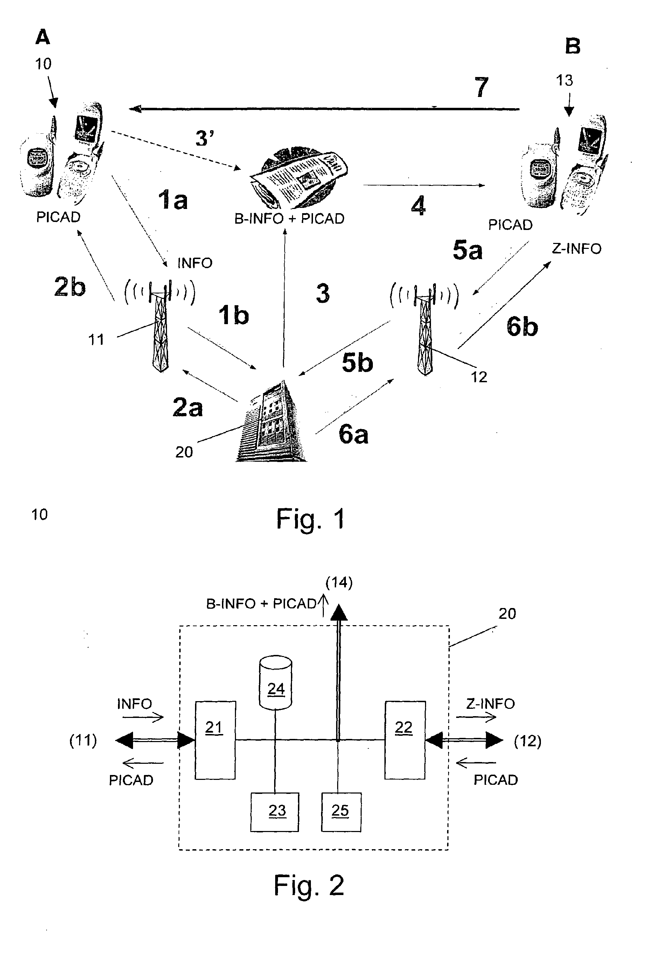

In den Zeichnungen zeigen Fig. 1 ein schematisches Ablaufdiagramm des erfindungsgemäßen Informationsbereitstellungsverfahrens und Fig. 2 ein Blockschaltbild eines Servers zur Verwendung in einem erfindungsgemäßen Informationsbereitstellungssystem.

Zunächst auf Fig. 1 Bezug nehmend ist darin der Ablauf des erfindungsgemäßen Verfahrens zur Abwicklung eines Privatverkaufsvorgangs zwischen einem Auftraggeber (Verkäufer) und einem Interessenten (Käufer) beschrieben.

Der Auftraggeber A möchte unter Benutzung des erfindungsgemäßen Informationsbereitstellungssystems einen Gegenstand, z.B. ein Auto, verkaufen. Deshalb bedient er sich einer Auftraggeber-Kommunikationseinrichtung 10, die im dargestellten Beispiel als Mobiltelefon mit eingebauter Kamera ausgebildet ist, so dass er mit dieser Auftraggeber-Kommunikationseinrichtung von seinem Verkaufsobjekt ein Foto oder ein Kurzvideo herstellen kann. Dieses Foto oder Video sendet er als MMS mit einer aussagekräftigen Beschreibung an eine Service-Telefonnummer. Das Foto oder Video stellt mit der aussagekräftigen Beschreibung einen öffentlichen Basisinformationsbestandteil B-INFO dar. Zusätzlich wird ein weiterer Zusatzinformationsbestandteil Z-INFO generiert, der nur auf Anforderung eines Interessenten elektronisch bereitgestellt werden soll. Dieser Zusatzinformationsbestandteil Z-INFO enthält beispielsweise eine Telefonnummer oder Adresse des Auftraggebers, unter der ein Interessent mit dem Auftraggeber Kontakt aufnehmen kann. Es ist aber auch möglich, weitere Bilder oder Videos, die den angebotenen Gegenstand näher erläutern, in den Zusatzinformationsbestandteil Z-INFO aufzunehmen. Der Zusatzinformationsbestandteil Z-INFO wird vom Auftraggeber A erzeugt, könnte eventuell aber vom System automatisch generiert werden, beispielsweise unter Heranziehung der der Auftraggeber-Kommunikationseinrichtung 10 zugeordneten Telefonnummer, die ein eindeutiges Identitätsmerkmal darstellt. Die Informationsbestandteile B-INFO und Z-INFO bilden gemeinsam die Information INFO, die vom Auftraggeber A abgeschickt (Pfeil 1a) und über die Auftrags-Datenverbindung 11 als MMS an den Server 20 weitergeleitet (Pfeil 1b) und dort verarbeitet wird. Die Auftrags-Datenverbindung 11 ist in diesem Beispiel als Funktelefonnetzwerk (GPRS/GSM-Netz) ausgebildet. Sollte die Inserataufgabe (d.h. die Informationsübertragung) kostenpflichtig sein, so werden dem Auftraggeber A Gebühren auf seine Telefonrechung laut Tarif verbucht.

Nun auch auf Fig. 2 Bezug nehmend umfasst der Server 20 erste Kommunikationsmittel 21 zur Kommunikation mit den Auftraggeber-Kommunikationseinrichtungen 10 über die Auftrags-Datenverbindung 11. Weiters umfasst der Server 20 einen Datenspeicher 24 zum Speichern von über die Auftrags-Datenverbindung 11 empfangenen Informationen INFO sowie von Auftragscodes PICAD. Die Auftragscodes PICAD werden im Server 20 von Auftragscode-Erzeugungsmitteln 23 generiert und den empfangenen Informationen INFO zugewiesen, so dass eine eindeutige Zuordnung entsteht. Gleichzeitig übertragen die Auftragscode-Erzeugungsmittel 23 den generierten Auftragscode PICAD als SMS über die ersten Kommunikationsmittel 21 und Auftragsdatenverbindung 11 (siehe Pfeile 2a, 2b) an die Auftraggeber-Kommunikationseinrichtung 10 des Auftraggebers A, um als Bestätigungsnummer für späteren Kundensupport bzw. als Referenznummer zu dienen.

Die Auftragscode-Erzeugungsmittel 23 sind im vorliegenden Beispiel auch dazu ausgebildet, den in der Information INFO enthaltenen öffentlichen Informationsbestandteil B-INFO gemeinsam mit dem Auftragscode PICAD als Inserat z.B. an eine Anzeigenabteilung einer Zeitung 14 per Push Verfahren weiterzuleiten (Pfeil 3), welches in der nächsten Ausgabe der Zeitung gedruckt wird. Dieser Vorgang könnte vom Auftraggeber A, der in Kenntnis des Auftragcodes PICAD ist, auch händisch durchgeführt werden (Pfeil 3'). In diesem Fall wäre es auch nicht erforderlich, die gesamte Information INFO an den Server zu senden, sondern es würde genügen, nur den Zusatzinformationsbestandteil Z-INFO zu senden, der im Server mit dem Auftragscode PICAD verknüpft und gespeichert würde.

Der Interessent B liest die Zeitung 14 und sieht das Inserat des Auftraggebers A. Er ist interessiert und will nähere Informationen (Telefonnummer, E-Mail Adresse,..) zwecks Kaufabwicklung bekommen. Dazu bedient er sich einer Informationsanforderungseinrichtung 13, die beispielsweise als Mobiltelefon ausgebildet ist (siehe Pfeil 4), und sendet den im Inserat enthaltenen Auftragscode PICAD als SMS an eine Service-Telefonnummer. Dadurch wird der Auftragscode über eine Anforderungsdatenverbindung 12 (in diesem Beispiel ein GPRS/GSM-Netz) an den Server 20 (siehe Pfeile 5a, 5b) geleitet. Die für dieses Service anfallenden Gebühren werden dem Interessenten B laut Tarif auf seine Telefonrechnung gebucht. Dies ist möglich, da die der Informationsanforderungseinrichtung 13 zugeordnete Telefonnummer ein Identitätsmerkmal dieser Einrichtung darstellt.

Wieder auf Fig. 2 Bezug nehmend erkennt man, dass der Server 20 zweite Kommunikationsmitteln 22 zur Kommunikation mit den Informationsanforderungseinrichtungen 13 über die Anforderungsdatenverbindung 12 enthält. Weiters umfasst der Server 20 Auswertemittel 25 zur Überprüfung der durch die zweiten Kommunikationsmittel 22 empfangenen Auftragscodes PICAD. Falls ein empfangener Auftragscode PICAD einer im Datenspeicher 24 gespeicherten Information INFO bzw. einem Zusatzinformationsbestandteil Z-INFO zugewiesen ist, wird der Zusatzinformationsbestandteil Z-INFO, falls möglich, direkt aus dem Datenspeicher 24 ausgelesen, bzw. extrahieren die Auswertemittel 25 aus der Information INFO den zusätzlichen Informationsbestandteil Z-INFO, der die gewünschte Telefonnummer, E-Mail-Adresse, gegebenenfalls weitere Daten, Bilder, Videos etc. über den inserierten Gegenstand enthält, und senden diesen zusätzlichen Informationsbestandteil Z-INFO über die zweiten Kommunikationsmittel 22 und die Anforderungsdatenverbindung 12 an die Informationsanforderungseinrichtung 13 des Interessenten B (siehe Pfeile 6a, 6b in Fig. 1). Der Informationsbestandteil Z-INFO ist bei der Übertragung in SMS/MMS eingepackt.

Da der Interessent B nun alle notwendigen Informationen erhalten hat, kann er den Verkauf mit dem Auftraggeber (bzw. in diesem Fall Verkäufer) A abwickeln.

In einer in der Zeichnung nicht dargestellten Ausführungsform der Erfindung kann an Stelle der direkten Übertragung des Zusatzinformationsbestandteiles Z-INFO lediglich ein Freischaltecode an die Informationsanforderungseinrichtung 13 übertragen werden, mit dem die Informationsanforderungseinrichtung den Zusatzinformationsbestandteil von einer vorgegebenen oder zusammen mit dem Freischaltecode mitgeteilten elektronischen Adresse (bzw. Telefonnummer) herunterladen kann.

## Patentansprüche

1. Verfahren zum Bereitstellen von Information (INFO), wobei die Information (INFO einen öffentlichen Basisinformationsbestandteil (B-INFO) und einen von einem Server (20) auf Anfrage elektronisch bereitzustellenden Zusatzinformationsbestandteil (Z-INFO) aufweist, **gekennzeichnet durch**
das Empfangen der von einer Auftraggeber-Kommunikationseinrichtung (10) über eine Auftrags-Datenverbindung (11) gesendeten Information (INFO) bzw. zumindest des Zusatzinformationsbestandteils (Z-INFO) **durch** den Server (20),
das Speichern der Information (INFO) bzw. des Zusatzinformationsbestandteils (Z-INFO) in einem mit dem Server kommunizierenden Datenspeicher (24),
das Generieren eines Produktinformationscodes (PICAD) **durch** den Server (20) und Zuweisen des Produktinformationscodes (PICAD) zur empfangenen Information (INFO) bzw. zum Zusatzinformationsbestandteil (Z-INFO),
wobei der Server (20) den generierten Produktinformationscode (PICAD) an die Auftraggeber-Kommunikationseinrichtung (10) und/oder andere vorgegebene Empfänger, optional unter Hinzufügung des öffentlichen Basisinformationsbestandteils (B-INFO), sendet,
bei Empfangen eines von einer Informationsanforderungseinrichtung (13) über eine Anforderungsdatenverbindung (12) an den Server (20) gesendeten Produktinformationscodes (PICAD) das Überprüfen des Produktinformationscodes im Server, ob der empfangene Produktinformationscode (PICAD) einer gespeicherten Information (INFO) bzw. einem Zusatzinformationsbestandteil (Z-INFO) zugewiesen ist, und gegebenenfalls das Übertragen des Zusatzinformationsbestandteils (Z-INFO) der zugewiesenen Information an die Informationsanforderungseinrichtung (13).

2. Verfahren nach Anspruch 1, **dadurch gekennzeichnet, dass** die Auftrags-Datenverbindung (11) und die Anforderungs-Datenverbindung (12) in einem Computerdaten- oder Telekommunikationsnetzwerk ausgebildet sind.

3. Verfahren nach Anspruch 1 oder 2, **dadurch gekennzeichnet, dass** das Übertragen des Zusatzinformationsbestandteiles (Z-INFO) an die Informationsanforderungseinrichtung (13) das Übertragen eines Freischaltecodes an die Informationsanforderungseinrichtung umfasst, mit welchem Freischaltecode die Informationsanforderungseinrichtung den Zusatzinformationsbestandteil von einer vorgegebenen oder zusammen mit dem Freischaltecode mitgeteilten elektronischen Adresse herunterladen kann.

4. Verfahren nach einem der vorhergehenden Ansprüche, **dadurch gekennzeichnet, dass** die Auftraggeber-Kommunikationseinrichtung (10) und die Informationsanforderungseinrichtung (13) als Telekommunikationsendgerät, insbesondere Mobiltelefon, oder als Personal Digital Assistant (PDA), oder als digitale Kamera mit Kommunikationsmitteln, oder als Computer ausgebildet sind.

5. Verfahren nach einem der vorhergehenden Ansprüche, **dadurch gekennzeichnet, dass** ein Identitätsmerkmal der mit dem Server (20) kommunizierenden Auftraggeber-Kommunikationseinrichtungen (10) und/oder Informationsanforderungseinrichtungen (13) protokolliert wird.

6. Verfahren nach einem der vorhergehenden Ansprüche, **dadurch gekennzeichnet, dass** die Information (INFO) bzw. der Basisinformationsbestandteil (B-INFO) von der Auftraggeber-Kommunikationseinrichtung (10) an den Server (20) mittels SMS/MMS oder E-Mail übertragen wird.

7. Verfahren nach einem der vorhergehenden Ansprüche, **dadurch gekennzeichnet, dass** der Zusatzinformationsbestandteil (Z-INFO) von dem Server (20) an die Informationsanforderungseinrichtung (13) mittels SMS/MMS oder E-Mail übertragen wird.

8. Verfahren nach einem der vorhergehenden Ansprüche, **dadurch gekennzeichnet, dass** der öffentliche Basisinformationsbestandteil (B-INFO) Text, Bilder oder Videosequenzen umfasst.

9. Verfahren nach einem der vorhergehenden Ansprüche, **dadurch gekennzeichnet, dass** der Zusatzinformationsbestandteil (Z-INFO) eine Kontaktadresse, insbesondere Telefonnummer oder E-Mail-Adresse eines Auftraggebers enthält.

10. Verfahren nach einem der Ansprüche 1 bis 8, **dadurch gekennzeichnet, dass** der Zusatzinformationsbestandteil (Z-INFO) elektronische Dateien, wie z.B. Bilder, Videos, Computerprogramme, enthält.

11. Verfahren nach einem der vorhergehenden Ansprüche, **dadurch gekennzeichnet, dass** das gemeinsame Veröffentlichen des öffentlichen Basisinformationsbestandteils (B-INFO) und des Produktinformationscodes (PICAD) durch den Server (20) veranlasst wird, vorzugsweise in Form der Übermittlung (Pfeil 3) der Daten an Zeitungs- oder Zeitschriftenredaktionen oder an Internetseiten.

12. System zum Bereitstellen von Information, wobei die Information einen öffentlichen Basisinformationsbestandteil (B-INFO) und einen nur auf Anforderung elektronisch bereitzustellenden Zusatzinformationsbestandteil aufweist, **gekennzeichnet durch** einen Server (20) mit
ersten Kommunikationsmitteln (21) zur Kommunikation mit einer Vielzahl von Auftraggeber-Kommunikationseinrichtungen (10) über zumindest eine Auftrags-Datenverbindung (11),
einem Datenspeicher (24) zum Speichern von über die Auftrags-Datenverbindung empfangenen Informationen (INFO) bzw. Zusatzinformationsbestandteilen (Z-INFO),
Produktinformationscode-Erzeugungsmitteln (23) zum Generieren eines Produktinformationscodes (PICAD) und Zuweisen des Produktinformationscodes zu empfangener Information (INFO) bzw. Zusatzinformationsbestandteil (Z-INFO), wobei die Produktinformationscode-Erzeugungsmittel (23) vorzugsweise dazu ausgebildet sind, den generierten Produktinformationscode (PICAD) über die ersten Kommunikationsmittel (21) an die Auftraggeber-Kommunikationseinrichtung (10) zu übertragen,
zweiten Kommunikationsmitteln (22) zur Kommunikation mit einer Vielzahl von Informationsanforderungseinrichtungen (13) über zumindest eine Anforderungsdatenverbindung (12),
Auswertemitteln (25) zur Überprüfung von **durch** die zweiten Kommunikationsmittel (22) empfangenen, von den Informationsanforderungseinrichtungen (13) an den Server (20) gesendeten Produktinformationscodes (PICAD), ob der empfangene Produktinformationscode einer im Datenspeicher gespeicherten Information (INFO) bzw. einem Zusatzinformationsbestandteil (Z-INFO) zugewiesen ist und gegebenenfalls zum Übertragen des gespeicherten oder aus der Information (INFO) extrahierten zugewiesenen Zusatzinformationsbestandteils (Z-INFO) über die zweiten Kommunikationsmittel (22) an die Informationsanforderungseinrichtung (13).

13. System nach Anspruch 12, **dadurch gekennzeichnet, dass** der Server (20) ein verteiltes Computersystem umfasst.

14. System nach Anspruch 12 und 13, **dadurch gekennzeichnet, dass** die ersten und zweiten Kommunikationsmittel (21, 22) als Interface für den Anschluss an ein Telekommunikationsnetzwerk oder Computernetzwerk ausgebildet sind.
